(19) Europäisches Patentamt

European Patent Office

Office européen des brevets

(11) Veröffentlichungsnummer: **0 129 041**
**B1**

(12) **EUROPÄISCHE PATENTSCHRIFT**

(45) Veröffentlichungstag der Patentschrift:
03.08.88

(21) Anmeldenummer: **84105280.6**

(22) Anmeldetag: **10.05.84**

(51) Int. Cl.⁴: **F 16 D 35/00**, F 01 P 7/04

(54) **Temperatur- und drehzahlabhängig gesteuerte Flüssigkeitsreibungskupplung.**

(30) Priorität: **15.06.83 DE 3321616**

(43) Veröffentlichungstag der Anmeldung:
**27.12.84 Patentblatt 84/52**

(45) Bekanntmachung des Hinweises auf die Patenterteilung:
**03.08.88 Patentblatt 88/31**

(84) Benannte Vertragsstaaten:
**BE DE FR GB IT SE**

(56) Entgegenhaltungen:
**DE - A - 2 439 256**
**FR - A - 1 553 298**
**GB - A - 1 128 597**

(73) Patentinhaber: **Süddeutsche Kühlerfabrik Julius Fr. Behr GmbH & Co. KG, Mauserstrasse 3, D-7000 Stuttgart 30 (DE)**

(72) Erfinder: **Martin, Hans, Dipl.-Ing., Wartbergstrasse 27, D-7000 Stuttgart 1 (DE)**

(74) Vertreter: **Heumann, Christian, Süddeutsche Kühlerfabrik Julius Fr. Behr GmbH & Co. KG Patentabteilung Mauserstrasse 3 Postfach 30 09 20, D-7000 Stuttgart 30 (DE)**

## Beschreibung

Die Erfindung bezieht sich auf eine temperatur- und drehzahlabhängig gesteuerte Flüssigkeitsreibungskupplung nach dem Oberbegriff des Anspruches 1.

Derartige Flüssigkeitsreibungskupplungen wurden durch die DE-A-24 39 256 bekannt.

Dieser vorbekannte Kupplungstyp baut infolge der zylindrischen Arbeitsflächen in axialer Richtung relativ tief; durch die Überlagerung von Temperatur- und Drehzahleinfluss auf ein Stellglied ergibt sich ein unzureichendes Regelverhalten der Kupplung; durch die Befestigung des Stellgliedes am Primärteil entsteht zwischen Ventilhebel und Schaltstift eine Relativbewegung, die mit unerwünschter Reibung verbunden ist.

Durch die FR-A-1 553 298 wurde eine Flüssigkeitsreibungskupplung bekannt, bei welcher sowohl in der Antriebsscheibe als auch in dem abtriebsseitigen Kupplungsgehäuse jeweils eine Vorratskammer vorgesehen ist. Zwischen primärseitiger Vorratskammer und Arbeitskammer der Kupplung ist eine Überströmöffnung vorgesehen, innerhalb welcher ein fliehkraftbetätigter, federbelasteter Staukörper radial verschiebbar ist, welcher den Zulauf und Ablauf des viskosen Fluids kontrolliert. Oberhalb einer bestimmten Drehzahl der Antriebsscheibe wandert der Staukörper nach aussen und fördert das viskose Medium aus dem Arbeitsraum in den primärseitigen Vorratsraum, womit der Antrieb unterbrochen bzw. vermindert wird. Im Rückflusskanal zwischen Arbeitsraum und sekundärseitigen Vorratsraum befindet sich ein fliehkraftbetätigtes Ventil, welches den Rücklaufkanal erst oberhalb einer bestimmten Abtriebsdrehzahl (Drehzahl des Gehäuses) freigibt. In diesem Falle strömt das viskose Medium aus dem Arbeitsraum in den sekundärseitigen Vorratsraum, so dass der Antrieb ebenfalls unterbrochen bzw. vermindert wird. Diese Kupplung ist also durch zwei drehzahlabhängige Regelorgane gekennzeichnet, die jeweils in der Antriebs- und in der Abtriebsseite der Kupplung angeordnet und auf die Antriebs- bzw. Abtriebsdrehzahl der Kupplung reagieren. Eine Temperatursteuerung liegt bei dieser Kupplung nicht vor; die im Ausführungsbeispiel gemäss Fig. 6 vorgesehene Bimetallfeder bestimmt lediglich die Vorspannung der Rückstellfeder des fliehkraftbetätigten Ventils in der Abtriebsseite.

Durch die DE-B-28 14 608 wurde eine temperaturgesteuerte Flüssigkeitsreibungskupplung bekannt, bei welcher eine Antriebsscheibe mit planparallelen Strinflächen in einer Arbeitskammer umläuft und mit dieser axiale Arbeitsspalte auf beiden Seiten der Scheibe bildet. Diese Kupplung weist neben der Arbeitskammer eine abtriebsseitig angeordnete Vorratskammer auf, welche einerseits durch ein temperaturgesteuertes Ventil und andererseits durch eine von einem Staukörper kontrollierte Rücklaufbohrung mit der Arbeitskammer verbunden ist. Diese Kupplung zeigt somit eine reine Temperatursteuerung.

Es ist Aufgabe der Erfindung, eine Flüssigkeitsreibungskupplung der eingangs genannten Art als kleiner bauende, leichtere Kupplung mit besserem Regelverhalten zu schaffen. Insbesondere soll erreicht werden, dass die Kupplung sicher oberhalb einer bestimmten Drehzahl abschaltet und unterhalb einer bestimmten Drehzahl wieder zuschaltet, wobei der Bereich, in dem zu- und abgeschaltet wird, möglichst klein sein soll. Die Lösung dieser Aufgabe ergibt sich zunächst aus den kennzeichnenden Merkmalen des Anspruches 1. Durch die Anordnung einer Trennwand wird zusätzlich zu der primärseitigen Vorratskammer noch eine sekundärseitige Vorratskammer geschaffen, wobei der Zustrom aus der sekundärseitigen Vorratskammer in die Arbeitskammer durch eine temperaturabhängige Steuerung und die Füllung bzw. Leerung der primärseitigen Vorratskammer durch eine drehzahlabhängige Steuerung erfolgt. Damit entfällt einerseits die Reibung zwischen Ventilhebel und Schaltstift, andererseits ergibt sich eine saubere Trennung zwischen Temperatur- und Drehzahleinfluss auf die Füllungsregelung und damit das Zu- und Abschaltverhalten der Kupplung: Die Zu- bzw. Abschaltpunkte sind also nicht mehr von der Temperatur der die Kupplung anblasenden Luft, sondern allein von der Antriebsdrehzahl der Kupplung, d.h. von der Motordrehzahl, abhängig. Dies ist insbesondere dann vorteilhaft, wenn das Fahrzeug, in dem die Kupplung zum Antrieb des Lüfters eingebaut ist, mit hoher Geschwindigkeit fährt und infolge Staudruckes genügend Kühlluft zur Verfügung steht, die Kupplung bei hohen Aussentemperaturen jedoch zuschalten würde. Bei hoher Motordrehzahl ergeben sich dann hohe Differenzzahlen, die zu einer hohen Schlupfleistung und damit zu einer unzulässig starken Erwärmung und Leistungsverlust führen. Durch das zuverlässige Abschalten bei einer definierten Drehzahl vermeidet die Erfindung diese unerwünschte Verlustleistung der Kupplung, verlängert somit die Lebensdauer der Kupplung und steigert die Leistung der Antriebsmaschine.

Nach einer vorteilhaften Weiterbildung der Erfindung gemäss Anspruch 2, ist in der primärseitigen Vorratskammer ein fliehkraftbetätigter, radial beweglicher Staukörper angeordnet, der unter dem Einfluss der Fliehkraft in den Arbeitsraum ausfahrbar ist. Durch diese einfache konstruktive Massnahme ist es möglich, oberhalb einer bestimmten Drehzahl das viskose Fluid aus der Arbeitskammer in die primärseitige Vorratskammer zu fördern und damit die Kupplung abzuregeln. Nach einer weiteren vorteilhaften Ausgestaltung der Erfindung gemäss Anspruch 3 ist der Staukörper auf einem Schwenkarm befestigt, so dass sich für den Staukörper eine Radialbewegung ergibt. Der Staukörper ist somit mit einfachen Mitteln funktionssicher und raumsparend innerhalb der primärseitigen Vorratskammer angeordnet.

Eine weitere vorteilhafte Ausgestaltung der Erfindung ergibt sich aus Anspruch 4, wonach der Arbeitsraum durch eine beliebige Anzahl von Axialspalten zwischen planparallelen Arbeitsflächen des Primärteiles und des Sekundärteiles gebildet wird. Durch diese sogenannte Scheibenbauweise der Kupplung ergibt sich eine wesentlich geringere Bautiefe. Nach vorteilhaften Weiterbildungen der Erfindung gemäss den Ansprüchen 5, 6 und 7 ist der Primärteil aus zwei Scheiben gebildet, und die Scheiben des Primärteiles sind aus geprägtem Blech oder Kunststoff hergestellt – diese Massnahmen verringern das Gewicht und die Herstellungskosten der Kupplung.

Ein Ausführungsbeispiel der Erfindung ist in der Zeichnung dargestellt und wird im folgenden näher beschrieben. Es zeigen

Fig. 1 einen Axialschnitt durch die Flüssigkeitsreibungskupplung und

Fig. 2 eine Teilansicht in Richtung der Kupplungs-Kupplungsachse (Richtung X).

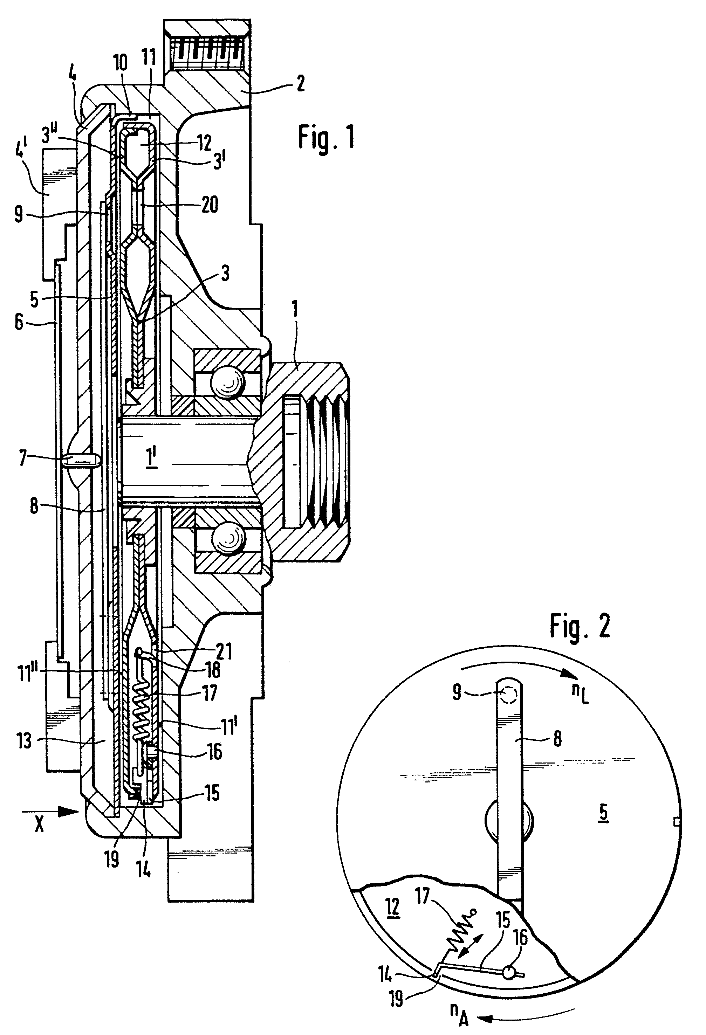

Figur 1 zeigt die im Schnitt dargestellte Flüssigkeitsreibungskupplung, wie sie beispielsweise für den Antrieb von Lüftern bei wassergekühlten Kraftfahrzeugmotoren Verwendung findet. Dabei ist die Kupplung überlicherweise mit ihrem Antriebsteil 1 an der Brennkraftmaschine des Kraftfahrzeuges befestigt und trägt auf einem angetriebenen Wellenstummel 1' die hohl ausgebildete Antriebsscheibe 3, die zusammen mit dem Antriebsteil 1 den sogenannten Primärteil bildet. Auf der Abtriebsseite ist, drehbar gegenüber dem Antriebsteil 1 gelagert, ein Kupplungsgehäuse 2 angeordnet, das frontseitig durch einen Deckel 4 verschlossen wird, wobei zwischen beiden Teilen eine Trennwand 5 eingespannt ist. Der Deckel 4 trägt auf seiner Frontseite Kühlrippen 4', unter denen ein temperatur-weg-empfindliches Element, ein Bimetall 6, eingespannt ist, dessen Bewegung über einen Schaltstift 7 auf einen Ventilhebel 8 übertragen wird, der federnd an der Zwischenwand 5 befestigt ist und eine Öffnung 9 in der Zwischenwand 5 verschliesst oder freigibt. An die Zwischenwand 5 ist in ihrem radial äussersten Bereich ein Staukörper 10 angeformt, der als Vorsprung axial in einen Arbeitsraum 11 zwischen Primärscheibe 3 und Sekundärteil 2 hineinragt. Die Primärscheibe 3 wird durch zwei schalenförmig geprägte Blechscheiben 3', 3'' gebildet, die zwischen sich eine prmärseitige Vorratskammer 12 einschliessen. Durch die Trennwand 5 und den Kupplungsdeckel 4 wird eine weitere, die sekundärseitige Vorratskammer 13 gebildet. Zwischen sekundärseitiger Trennwand 5 und Kupplungsgehäuse 2 einerseits und Stirnflächen der Primärscheibe 3 andererseits sind Axialspalte 11', 11'' gebildet, die Teil der Arbeitskammer 11 sind. Innerhalb der prmärseitigen Vorratskammer 12 befindet sich ein radial nach innen oder aussen verschiebbarer Staukörper 14, der eine in der äusseren Zylinderfläche der Primärscheibe 3 befindliche Überströmöffnung 19 durchsetzt. Der Staukörper 14 ist dabei in seinem Querschnitt kleiner als der Querschnitt der Überströmöffnung 19, so dass bei ausgefahrenem Staukörper 14 noch ein Überströmquerschnitt zwischen Arbeitskammer 11 und primärseitiger Vorratskammer 12 frei bleibt. Zwecks Sicherstellung der Radialbewegung des Staukörpers 14 ist dieser auf dem Ende eines Schwenkarmes 15 befestigt, der mit seinem anderen Ende mittels eines Drehzapfens 16 an der Primärscheibe 3 befestigt ist, wie dies besonders deutlich aus Figur 2 hervorgeht. Am äusseren Ende des Schwenkarmes 15 greift eine Rückstellfeder 17 an, die mit ihrem anderen Ende an einem Widerlager 18 der Primärscheibe 3 befestigt ist. Die Kupplung ist zum Teil mit einem viskosen Medium, z.B. mit einem im Handel erhältlichen Silikonöl, gefüllt, das sich je nach Betriebszustand der Kupplung in einer der drei Kammern, der primärseitigen oder sekundärseitigen Vorratskammer 12 oder 13 oder in der Arbeitskammer 11, befindet. Aus strömungstechnischen Gründen sind in der Primärscheibe 3 Durchtrittsöffnungen 20 und Entlüftungsöffnungen 21 angebracht.

Die Arbeitsweise der Kupplung ist die folgende: Unterhalb einer festgelegten Antriebsdrehzahl arbeitet die Kupplung nur temperaturgeregelt – wie bekannte Flüssigkeitsreibungskupplungen. Bei niedriger Luftanblastemperatur nimmt das Bimetall 6 – wie in Figur 1 dargestellt – eine etwa gestreckte Lage ein, so dass der Ventilhebel 8 die Ventilöffnung 9 verschliesst – damit kann kein Öl aus der sekundärseitigen Vorratskammer 13 in die Arbeitskammer 11 strömen, vielmehr wird das Öl über den Staukörper 10 aus der Arbeitskammer 11 in die Vorratskammer 13 zurückgefördert, so dass die Kupplung abgeschaltet ist bzw. nur mit Leerlaufdrehzahl umläuft. Steigt die Temperatur der auf das Bimetall 6 auftreffenden Luft, so wölbt sich dieses nach aussen, und der Schaltstift 7 lässt den unter Federspannung stehender Ventilhebel 8 von der Ventilöffnung 9 abheben, so dass Öl in die Arbeitskammer 11 strömen kann. Die Drehzahl des Sekundärteiles 2, also die Lüfterdrehzahl, steigt damit an, da die am Arbeitsraum 11 bzw. in den Axialspalten 11' und 11'' befindliche Ölmenge das übertragbare Drehmoment, und damit die Lüfterdrehzahl, bestimmt. Steigt nun die Antriebsdrehzahl des Antriebsteiles 1 bzw. der Primärscheibe 3, so beginnt der Staukörper 14 aufgrund seiner Masse unter dem Einfluss der Fliehkraft und gegen die Wirkung der Rückstellfeder 17 radial nach aussen zu wandern, wobei er die Überströmöffnung 19 in der Primärscheibe 3 durchsetzt. Durch die Relativbewegung zwischen Primärscheibe 3 und Sekundärteil 2 bildet sich vor dem Staukörper 14 ein Stau, der einen Rückfluss des in der Arbeitskammer 11 befindlichen Öles in die primärseitige Vorratskammer 12 bewirkt. Damit wird der Arbeitskammer 11 und den Axialspalten 11' und 11'' Öl entzogen, so dass die Abtriebsdrehzahl der Kupplung absinkt. Die primärseitige Vorratskammer 12 ist so bemessen und ausgebildet, dass gerade soviel Öl aus der Arbeitskammer 11 in die Vorratskammer 12 abgezogen wird, dass die Ölzirkulation zwischen sekundärseitiger Vorratskammer 13 und Arbeitskammer 11 unterbrochen wird – es befindet sich dann also ein Restvolumen an Öl als Flüssigkeitsring in der sekundärseitigen Vorratskammer 13, und zwar radial ausserhalb der Ventilöffnung 9. Bei nachlassender Antriebsdrehzahl wird der Staukörper 14 infolge der Kraft der Rückstellfeder 17 wieder radial nach innen bewegt, so dass keine Ölförderung mehr von der Arbeitskammer 11 in die primärseitige Vorratskammer 12 erfolgt, vielmehr kehrt sich nun die Förderrichtung durch die Überströmöffnung 19 um, da das Öl jetzt infolge Fliehkraftwirkung wieder nach aussen durch die Überströmöffnung 19 in die Arbeitskammer 11 geschleudert wird. Die Lüfterdrehzahl steigt jetzt wieder an, weil der Kreislauf zwischen sekundärseitiger Vorratskammer 13 und Arbeitskammer 11 wieder geschlossen wird.

**Patentansprüche**

1. Temperatur- und drehzahlabhängig gesteuerte Flüssigkeitsreibungskupplung mit einem antreibenden Primärteil (1, 3) und einem abtreibenden Sekundärteil (2, 4), wobei zwischen Primär- und Sekundärteil eine mit viskosem Fluid füllbare Arbeitskammer (11) und im Primärteil (3) eine Vorratskammer (12) angeordnet sind und wobei zwischen Vorrats- und Arbeitskammer eine zur Füllung und Entleerung der Arbeitskammer (11) steuerbare Fluidverbindung (19) vorgesehen ist, dadurch gekennzeichnet, dass im Sekundärteil (2, 4) eine weitere Vorratskammer (13) angeordnet ist, die durch eine Trennwand (5) von der Arbeitskammer (11) abgeteilt ist, wobei die Trennwand (5) ein in direkter oder indirekter Abhängigkeit von der Kühlmitteltemperatur ausschliesslich betätigtes Ventil (8, 9) zur Steuerung des Zustromes des viskosen Fluids in die Arbeitskammer (11) aufweist und in der Arbeitskammer (11) ein Pumporgan (10) zur Steuerung des Rückflusses des viskosen Fluids in die sekundärseitige Vorratskammer (13) angeordnet ist, und dass die Fluidverbindung (19) zwischen der Arbeitskammer (11) und der primärseitigen Vorratskammer (12) über ein drehzahlabhängiges, von der Kühlmitteltemperatur unabhängiges Organ (14, 16, 17, 18) steuerbar ist.

2. Flüssigkeitsreibungskupplung nach Anspruch 1, dadurch gekennzeichnet, dass das drehzahlabhängige Organ als fliehkraftbetätigter Staukörper (14) ausgebildet ist, der in der primärseitigen Vorratskammer (12) angeordnet und durch eine Überströmöffnung (19), die als Zu- und Ablauf für das viskose Fluid dient, in die Arbeitskammer (11) radial verschiebbar ist.

3. Flüssigkeitsreibungskupplung nach Anspruch 2, dadurch gekennzeichnet, dass der Staukörper (14) auf einem durch eine Rückstellfeder (17) belasteten Schwenkarm (15) befestigt ist.

4. Flüssigkeitsreibungskupplung nach Anspruch 1, 2 oder 3, dadurch gekennzeichnet, dass der Primärteil (3) planparallele, stirnseitige Arbeitsflächen und Sekundärteil (2, 4) parallel gegenüberliegende Arbeitsflächen aufweist, wobei zwischen den Arbeitsflächen Axialspalte (11, 11'') gebildet sind, die die Arbeitskammer (11) bilden.

5. Flüssigkeitsreibungskupplung nach einem der Ansprüche 1–4, dadurch gekennzeichnet, dass der Primärteil (3) aus zwei die primärseitige Vorratskammer (12) zwischen sich einschliessenden Scheiben (3, 3'') gebildet ist.

6. Flüssigkeitsreibungskupplung nach Anspruch 5, dadurch gekennzeichnet, dass die Scheiben (3, 3'') als geprägte Blechscheiben ausgebildet sind.

7. Flüssigkeitsreibungskupplung nach Anspruch 5, dadurch gekennzeichnet, dass die Scheiben (3, 3'') aus Kunststoff hergestellt sind.

**Claims**

1. A fluid friction coupling which is controlled in dependence on temperature and speed of rotation, comprising a driving primary portion (1, 3) and a driven secondary portion (2, 4) wherein a working chamber (11) which can be filled with viscous fluid is arranged between the primary and secondary portions and a supply chamber (12) is arranged in the primary portion (3) and wherein a fluid communication (19) which is controllable for filling and emptying of the working chamber (11) is provided between the supply and working chambers, characterised in that disposed in the secondary portion (2, 4) is a further supply chamber (13) which is separated from the working chamber (11) by a partition (5), wherein the partition (5) has a valve (8, 9) which is actuated exclusively in direct or indirect dependency on the coolant temperature, for controlling the feed flow of the viscous fluid into the working chamber (11) and arranged in the working chamber (11) is a pump member (10) for controlling the return flow of the viscous fluid into the supply chamber (13) on the secondary side, and that the flow communication (19) between the working chamber (11) and the supply chamber (12) on the primary side is controllable by way of a member (14, 16, 17, 18) which is dependent on speed of rotation and which is independent of the coolant temperature.

2. A fluid friction coupling according to claim 1 characterised in that the member which is dependent on speed of rotation is in the form of a centrifugal force-actuated dam member (14) which is arranged in the supply chamber (12) on the primary side and which is radially displaceable into the working chamber (11) through a flow transfer opening (19) which serves as a feed and discharge means for the viscous fluid.

3. A fluid friction coupling according to claim 2 characterised in that the dam member (14) is fixed on a pivotal arm (15) loaded by a return spring (17).

4. A fluid friction coupling according to claim 1, claim 2 or claim 3 characterised in that the primary portion (3) has plane-parallel front working faces and the secondary portion (2, 4) has working faces which are disposed in parallel opposite relationship, wherein formed between the working faces are axial gaps (11', 11'') which form the working chamber (11).

5. A fluid friction coupling according to one of claims 1 to 4 characterised in that the primary portion (3) is formed from two discs (3, 3'') enclosing the supply chamber (12) on the primary side between them.

6. A fluid friction coupling according to claim 5 characterised in that the discs (3, 3'') are in the form of pressed sheet metal discs.

7. A fluid friction coupling according to claim 5 characterised in that the discs (3, 3″) are made from plastics material.

**Revendications**

1. Accouplement à frottement visqueux, commandé en fonction de la température et de la vitesse de rotation, comprenant un élément primaire menant (1, 3) et un élément secondaire mené (2, 4), dans lequel sont prévues une chambre de travail (11) située entre l'élément primaire et l'élément secondaire et qui peut être remplie d'un fluide visqueux, et une chambre réservoir (12) située dans l'élément primaire, et dans lequel il est prévu, entre la chambre réservoir et la chambre de travail, une liaison fluidique commandable (19), pour remplir ou vider la chambre de travail (11), caractérisé en ce que, dans l'élément secondaire (2, 4) est disposée une chambre réservoir supplémentaire (13) qui est séparée de la chambre de travail (11) par une cloison (5), ladite cloison (5) présentant une soupape (8, 9) qui est exclusivement actionnée en fonction directe ou indirecte de la température du fluide de refroidissement, et qui sert à commander l'admission du fluide visqueux dans la chambre de travail (11), tandis que, dans la chambre de travail (11), est disposé un organe de pompage (10) destiné à commander le retour du fluide visqueux vers la chambre réservoir (13) de l'élément secondaire, et en ce que la liaison fluidique (19) prévue entre la chambre de travail (11) et la chambre réservoir (12) de l'élément primaire peut être commandée par un organe (14, 16, 17, 18) influencée par la vitesse de rotation mais pas par la température du fluide de refroidissement.

2. Accouplement à frottement visqueux selon la revendication 1, caractérisé en ce que l'organe influencé par la vitesse de rotation est constitué par un corps de retenue (14) actionné par la force centrifuge, qui est disposé dans la chambre réservoir (12) de l'élément primaire et peut être repoussé radialement dans la chambre de travail (11) en passant à travers une ouverture de passage (19) qui sert pour l'arrivée et l'écoulement du fluide visqueux.

3. Accouplement à frottement visqueux selon la revendication 2, caractérisé en ce que le corps de retenue (14) est monté sur un bras oscillant (15) chargé par un ressort de rappel (17).

4. Accouplement à frottement visqueux selon l'une des revendications 1, 2 et 3, caractérisé en ce que l'élément primaire (3) présente par ses extrémités frontales, des surfaces de travail planes, parallèles, en ce que l'élément secondaire (2, 4) présente des surfaces de travail parallèles, opposées, cependant que, entre les surfaces de travail, sont formées des fentes axiales (11′, 11″) qui définissent la chambre de travail (11).

5. Accouplement à frottement visqueux selon l'une des revendications 1 à 4, caractérisé en ce que l'élément primaire (3) est formé de deux disques (3′, 3″) qui délimitent entre eux la chambre réservoir (12) de l'élément primaire.

6. Accouplement à frottement visqueux selon la revendication 5, caractérisé en ce que les disques (3′, 3″) sont constitués par des disques de tôle emboutie.

7. Accouplement à frottement visqueux selon la revendication 5, caractérisé en ce que les disques (3′, 3″) sont réalisés en matière plastique.

# Fig. 1

# Fig. 2